# EUROPÄISCHE PATENTANMELDUNG

(11) **EP 4 257 954 A1**
(43) Veröffentlichungstag der Anmeldung: **11.10.2023**
(21) Anmeldenummer: 23164743.9
(22) Anmeldetag: 28.03.2023
(51) Int. Cl.: G01N 21/47, G01N 21/01, G01N 21/51, G01N 21/90

(54) **MESSVORRICHTUNG FÜR DIE DURCHFÜHRUNG EINER REFLEXIONSMESSUNG AN EINEM GEFÄSS**

(30) Priorität: 05.04.2022 DE 102022203374
(71) Anmelder: 2mag AG, 80992 München (DE)
(72) Erfinder: KRESS, Kai, 80992 München (DE)
(74) Vertreter: Mathys & Squire

(57) **Zusammenfassung**

Die vorliegende Erfindung betrifft eine Messvorrichtung (10) für eine Durchführung einer Reflexionsmessung an einem Gefäß (100), aufweisend eine Lichtquelle (20) zur Erzeugung eines Lichtstrahls (LS) entlang einer Lichtausgangsrichtung (LAR) und eine Empfangsvorrichtung (30) zum Empfangen von Lichtstrahlen (LS) entlang einer Empfangsrichtung (ER), weiter aufweisend einen Haltekörper (40) an welchem die Lichtquelle (20) und die Empfangsvorrichtung (30) befestigt sind, wobei der Haltekörper (40) einen Montageabschnitt (42) aufweist für eine Montage an dem Gefäß (100) in einer definierten Montageposition (MP), wobei weiter die Lichtquelle (20) am Haltekörper (40) relativ zum Montageabschnitt (42) in einer definierten Quellenposition (QP) und die Empfangsvorrichtung (30) am Haltekörper (40) relativ zum Montageabschnitt (42) in einer definierten Empfangsposition (EP) angeordnet sind, so dass sich zwischen der Empfangsrichtung (ER) und der Lichtausgangsrichtung (LAR) ein spitzwinkliger Anstellwinkel (α) ausbildet, so dass die Empfangsvorrichtung (30) aus dem Gefäß (100) reflektierte Lichtstrahlen (LS) empfängt.

## Beschreibung

Die vorliegende Erfindung betrifft eine Messvorrichtung für eine Durchführung einer Reflexionsmessung an einem Gefäß, ein Gefäß mit einer solchen Messvorrichtung sowie ein Verfahren für eine Montage einer erfindungsgemäßen Messvorrichtung an einem Gefäß.

Es ist bekannt, dass unterschiedliche Gefäße verwendet werden, um darin zum Beispiel biologisches Material aufzunehmen. Auch ist es bekannt, dass für die Überwachung von chemischen und/oder biologischen Abläufen in einem solchen Gefäß Sensoren eingesetzt werden, um das Voranschreiten solcher Abläufe zu überwachen und/oder zu dokumentieren. Neben Sensoren, welche in den Innenraum des Gefä-ßes hineinragen, sind auch Sensoren bekannt, welche durch das Gefäß hindurch eine Bestimmung von Messparametern zur Verfügung stellen können. Eine Möglichkeit einer Bestimmung basiert auf Lichtstrahlen, welche von einer Lichtquelle durch eine zumindest teilweise transparente Wandung des Gefäßes in den Innenraum des Gefäßes hineingelangen. Beispielsweise ist es bekannt, dass Lichtstrahlen, ausgesendet von einer Lichtquelle, auf der einen Seite in ein Gefäß eingebracht und auf der gegenüberliegenden Seite des Gefäßes mithilfe einer Empfangsvorrichtung empfangen werden, um den Grad der Transmission zu bestimmen. Daraus lässt sich beispielsweise der Trübungsgrad innerhalb des Gefäßes erfassen. Auch ist es bekannt, dass Reflexionsanteile aus der Einbringung von solchen Lichtstrahlen bestimmt werden sollen. Neben der Darstellung eines Transmissionsgrades, kann auch der Grad der Reflexion in qualitativer und/oder quantitativer Weise Rückschlüsse auf einen Zustand und/oder einen Zustandsparameter eines biologischen und/oder chemischen Ablaufs innerhalb des Gefäßes geben.

Nachteilhaft bei den bekannten Lösungen ist es, dass, insbesondere bei Reflexionsmessungen, der Winkel zwischen der Lichtausgangsrichtung der Lichtquelle und einer zugehörigen Empfangsrichtung der Empfangsvorrichtung entscheidend ist für die Qualität, aber auch für die Auswertungsmöglichkeiten in quantitativer Hinsicht für das empfangene reflektierte Licht. Daher ist es bei den bekannten Lösungen von entscheidender Bedeutung, die Relativpositionierung bei fest angebrachten Messvorrichtungen exakt hinsichtlich der Lichtausgangsrichtung und hinsichtlich der Empfangsrichtung aufeinander korrelierend zu positionieren. Ein reversibles Anbringen an Gefäßen oder ein nachträgliches Ausstatten von Gefäßen mit solchen Messvorrichtungen ist bereits deswegen nicht möglich, da bei solchen reversiblen oder mobilen Nutzungsformen die Exaktheit der Ausrichtung der Lichtausgangsrichtung und der Empfangsvorrichtung üblicherweise nicht eingehalten werden kann, sodass Messergebnisse von solchen nicht ausgerichteten Messvorrichtungen entsprechend nicht oder nur sehr schwer interpretiert werden können.

Es ist Aufgabe der vorliegenden Erfindung, die voranstehend beschriebenen Nachteile zu beheben. Insbesondere ist es Aufgabe der vorliegenden Erfindung, in kostengünstiger und einfacher Weise, eine mobile und/oder nachrüstbare Messvorrichtung für die Durchführung von Reflexionsmessungen an Gefäßen zur Verfügung zu stellen.

Die voranstehende Aufgabe wird gelöst durch eine Messvorrichtung mit den Merkmalen des Anspruchs 1, ein Gefäß mit den Merkmalen des Anspruchs 13 sowie ein Verfahren mit den Merkmalen des Anspruchs 14. Dabei gelten Merkmale und Details, die im Zusammenhang mit der erfindungsgemäßen Messvorrichtung beschrieben sind, selbstverständlich auch im Zusammenhang mit dem erfindungsgemäßen Gefäß sowie dem erfindungsgemäßen Verfahren und jeweils umgekehrt, sodass bezüglich der Offenbarung zu den einzelnen Erfindungsaspekten stets wechselseitig Bezug genommen wird beziehungsweise werden kann.

Die Erfindung betrifft eine Messvorrichtung für eine Durchführung einer Reflexionsmessung an einem Gefäß. Für diese Durchführung weist die Messvorrichtung eine Lichtquelle zur Erzeugung eines Lichtstrahls entlang einer Lichtausgangsrichtung auf. Weiter ist eine Empfangsvorrichtung vorgesehen zum Empfangen von Lichtstrahlen entlang einer Empfangsrichtung. Darüber hinaus ist die Messvorrichtung ausgestattet mit einem Haltekörper, an welchem die Lichtquelle und die Empfangsvorrichtung befestigt sind. Dabei ist der Haltekörper mit einem Montageabschnitt ausgestattet, für eine Montage an dem Gefäß in einer definierten Montageposition. Darüber hinaus ist die Lichtquelle am Haltekörper relativ zum Montageabschnitt in einer definierten Quellenposition sowie die Empfangsvorrichtung am Haltekörper relativ zum Montageabschnitt in einer definierten Empfangsposition angeordnet. Dies führt dazu, dass sich zwischen der Empfangsrichtung und der Lichtausgangsrichtung ein spitzwinkliger Anstellwinkel ausbildet, sodass die Empfangsvorrichtung aus dem Gefäß reflektierte Lichtstrahlen empfängt.

Wie bereits in der Einleitung erläutert worden ist, ist für eine quantitative oder qualitative Auswertung einer durchgeführten Reflexionsmessung der Winkel zwischen der Lichtausgangsrichtung und der Empfangsrichtung von entscheidender Bedeutung. Bei der erfindungsgemäßen Messvorrichtung ist dieser Winkel nun relativ zu einem Montageabschnitt eines Haltekörpers definiert. Diese Definition wird dadurch festgelegt, dass es eine definierte Empfangsposition sowie eine definierte Quellenposition gibt, deren örtliche Definition relativ zum Montageabschnitt ausgestaltet ist. Mit anderen Worten wird sich durch Änderung einer Absolutposition der Montageabschnitt auch die Absolutposition der Quellenposition und die Absolutposition der Empfangsposition ändern, wobei jedoch die Relativposition zwischen Quellenposition und Montageabschnitt und zwischen Empfangsposition und Montageabschnitt beibehalten wird. Dies führt insbesondere dazu, dass auch die Relativposition zwischen Quellenposition und Empfangsposition eingehalten werden kann.

Diese definierte Relativposition innerhalb des Systems der Messvorrichtung führt dazu, dass nun ein definierter Winkel als Anstellwinkel zwischen der Lichtausgangsrichtung und der Empfangsrichtung innerhalb der mobilen und damit insbesondere reversiblen befestigbaren Messvorrichtung vordefiniert werden kann. Diese Vordefinition kann als feste Vorgabe ausgebildet sein oder aber auch die später noch erläuterten flexiblen Variationsmöglichkeiten aufweisen.

Eine erfindungsgemäße Messvorrichtung kann nun an einem Gefäß entweder nachgerüstet oder aber, beispielsweise für einen mobilen Einsatz, in reversibler Weise temporär befestigt werden. Die entsprechende Anwendung, und auch damit einhergehende Vorteile, werden am nachfolgenden Beispiel näher erläutert.

Wird beispielsweise in einem biologischen Labor in einem Gefäß, zum Beispiel einem Becherglas, ein biologischer Vorgang durchgeführt, beispielsweise das Wachstum einer bestimmten Zellsorte oder Bakteriensorte, so ist es unter anderem erwünscht, diesen biologischen Vorgang zu überwachen und auch zu vermessen. Eine möglicherweise interessante Vermessung basiert dabei auf der Eintrübung der Flüssigkeit innerhalb des Becherglases, welche korreliert mit dem Wachstum und der Gesamtanzahl der Zellen innerhalb der Flüssigkeit im Gefäß. Durch eine Reflexionsmessung ist es möglich, den Trübheitsgrad zu bestimmen. Dies beruht auf der Tatsache, dass mit sich verstärkender Eintrübung einer solchen Flüssigkeit im Gefäß der Anteil an reflektiertem Licht ansteigt. Je nachdem, in welcher Winkelzusammensetzung, also in welchen Anstellwinkel eine Messung stattfindet, ist auch eine quantitative Auswertung und/oder sogar ein Rückschluss auf die Größe der einzelnen Zellagglomerate denkbar.

Um nun in der beschriebenen Laborsituation ein solches Gefäß mit einer Messmöglichkeit auszustatten, kann die Messvorrichtung gemäß der vorliegenden Erfindung mithilfe des Montageabschnitts an dem Gefäß befestigt werden. Bestimmte Befestigungsmechanismen werden später noch erläutert, aber im Rahmen dieses Beispiels ist ein Einhängen an der Oberkante des Becherglases möglich. Dies führt dazu, dass der Montageabschnitt, hier mit einer entsprechenden Aufhängevorrichtung oder Einhängevorrichtung, eine definierte Montageposition einnehmen kann. Diese definierte Montageposition ist an der Relativpositionierung des Haltekörpers relativ zur Außenoberfläche des Gefäßes. Dadurch, dass, wie bereits erläutert worden ist, innerhalb des Systems des Haltekörpers die Empfangsposition und die Quellenposition zueinander bereits definiert sind, wird durch die definierte Anordnung in der Montageposition nun diese Relativpositionierung über dieses System der Messvorrichtung auf das Gefäß angewendet. Dadurch, dass die Montageposition in definierter Weise relativ zum Gefäß positioniert ist, sind auf diese Weise automatisch auch die Empfangsposition und die Quellenposition in gleicher Weise relativ zum Gefäß festgelegt. Dies führt dazu, dass durch die Durchführung der Montageschritte und das Anordnen der Messvorrichtung in der Montageposition sich automatisch, oder in der später noch erläuterten manuellen Weise, der gewünschte spitzwinklige Anstellwinkel zwischen der Lichtausgangsrichtung und der Empfangsrichtung einstellt oder einstellen lässt. Dies führt dazu, dass auch bei dem beschriebenen mobilen Einsatz oder bei anderen Einsatzformen, wie einem Nachrüsten bestehender Gefäße mit einer solchen Messfunktionalität, die gewünschte spitzwinklige Anstellung mit einem definierten Anstellwinkel erreicht werden kann, sodass mit hoher Genauigkeit, in qualitativer und/oder in quantitativer Weise, eine Auswertung der durch die Reflexionsmessung am Gefäß erfassten Parameter möglich wird.

Es kann Vorteile mit sich bringen, wenn bei einer erfindungsgemäßen Messvorrichtung der Haltekörper wenigstens einen Quellen-Haltearm aufweist, an welchem die Lichtquelle befestigt ist, und/oder einen Empfangs-Haltearm aufweist, an welchem die Empfangsvorrichtung befestigt ist. Dabei ist der Quellen-Haltearm und/oder der Empfangs-Haltearm insbesondere mittels einer Scharniervorrichtung verbunden, zur Einstellung wenigstens eines Scharnierwinkels zwischen dem Quellen-Haltearm und dem Empfangs-Haltearm durch Bewegung um die Scharnierachse der Scharniervorrichtung. Die Verwendung von Untergruppen als Teilbauteile des Haltekörpers führt sozusagen zu einer Bewegungsmöglichkeit innerhalb des Teil-Systems des Haltekörpers. Neben der grundsätzlichen Möglichkeit, die gewünschten erläuterten Relativpositionierungen für die Empfangsvorrichtung und die Lichtquelle fest vorzugeben, kann hier auch eine Flexibilität durch die Scharniervorrichtung vorgegeben werden, um ein manuelles oder sogar automatisches Anpassen des hier beschriebenen Scharnierwinkels zur Verfügung zu stellen. Beim beschriebenen Beispiel des Becherglases kann dies dazu verwendet werden, dass beim Montieren des Haltekörpers in der Montageposition die Lichtquelle und/oder die Empfangsvorrichtung an der äußeren Oberfläche der Gefäßwandung des Gefäßes angelegt werden. Durch die Gewichtskraft und das sich einstellende Kraftgleichgewicht in der Montageposition wird die Scharniervorrichtung bewegt und die automatische Ausrichtung durch die Einstellung des Scharnierwinkels wird durch das Kraftgleichgewicht vorgegeben und erreicht. Alternativ oder zusätzlich ist selbstverständlich auch ein manuelles Verstellen der Scharniervorrichtung um die Scharnierachse möglich, um einen definiert vorgegebenen Scharnierwinkel zu erzielen.

Weitere Vorteile können erreicht werden, wenn bei einer erfindungsgemäßen Messvorrichtung der Montageabschnitt wenigstens ein reversibles Montagemittel aufweist, für eine reversible Montage an dem Gefäß in der Montageposition. Ein solches reversibles Montagemittel kann beispielsweise eine Einhängevorrichtung, ein Saugnapf oder ein mehrfach verwendbares Klebeelement sein. Bei der Ausbildung als reversibles Montagemittel ist die Messvorrichtung insbesondere mobil und mehrfach verwendbar ausgebildet, sodass sie beispielsweise an einem Becherglas, wie im oben beschriebenen Beispiel, reversibel befestigt wird. Nach Beendigung eines Versuchsaufbaus kann die Messvorrichtung entsprechend von diesem Becherglas wieder entfernt werden, um zu einem späteren Zeitpunkt an einem anderen Becherglas oder sogar einem anderen Gefäß, für einen anderen Versuch eingesetzt zu werden. Damit ist die Messvorrichtung mobil einsetzbar, flexibel im Labor verwendbar und gleichzeitig durch die beschriebenen Relativpositionierungen, jedoch mit hoher Messgenauigkeit hinsichtlich der Auswertung der durchführbaren Reflexionsmessung, ausgestattet.

Vorteile bringt es ebenfalls mit sich, wenn bei einer erfindungsgemäßen Messvorrichtung die Lichtquelle und/oder die Empfangsvorrichtung eine Kontaktfläche aufweisen für eine Kontaktierung des Gefäßes. Während grundsätzlich auch eine kontaktlose Reflexionsmessung denkbar ist, bringt eine Kontaktierung der Oberfläche des Gefä-ßes Vorteile hinsichtlich der Durchführung der Reflexionsmessung mit sich. Vorzugsweise gilt diese Kontaktierung sowohl für die Lichtquelle als auch für die Empfangsvorrichtung. Die Kontaktflächen können dabei optische Koppelflächen aufweisen, sodass sie eine Einkopplung aus optischen Gesichtspunkten für den Lichtstrahl entlang der Lichtausgangsrichtung in das Gefäß oder eine Auskopplung der empfangenen und reflektierten Lichtstrahlen aus dem Gefäß entlang der Empfangsrichtung darstellen können. Zusätzlich oder alternativ können die Kontaktflächen auch als mechanische Lagerflächen ausgestaltet sein, um ein Abstützen der Lichtquelle, der Empfangsvorrichtung und/oder des gesamten Haltekörpers an der Oberfläche des Gefäßes zu gewährleisten. Auch seitliche Abdeckungen oder Abschottungen, beispielsweise optische Dichtringe oder Ähnliches, sind einsetzbar, um zum Beispiel den Einfluss von Umgebungslicht zu minimieren. Nicht zuletzt ist noch darauf hinzuweisen, dass solche Kontaktflächen beispielsweise an die Art und insbesondere an die geometrische Form der Oberfläche des Gefäßes angepasst sein können, zum Beispiel eine einfache oder eine mehrfache Krümmung aufweisen können.

Weitere Vorteile sind erzielbar, wenn bei einer erfindungsgemäßen Messvorrichtung die Kontaktfläche der Lichtquelle und/oder der Empfangsvorrichtung einen Ausrichtungsabschnitt aufweist, für eine Ausrichtung oder eine Unterstützung der Ausrichtung der Lichtausgangsrichtung und/oder der Empfangsrichtung. Darunter ist zu verstehen, dass beispielsweise über einen Krümmungsradius der Oberfläche solcher Kontaktflächen definiert ist, an welcher Stelle einer Wandung sie angelegt werden können. Nur bei einer passenden Positionierung bildet sich die gewünschte Kontaktierung aus, sodass eine Vorgabe der Ausrichtung gegeben ist. Sind Lichtquelle und/oder Empfangsvorrichtung variabel, insbesondere in loser Weise an dem Haltekörper befestigt, so kann auch eine automatisierte Ausrichtung stattfinden, indem durch das Kontaktieren der Oberfläche des Gefäßes eine entsprechende Gegenkraft für die Ausrichtung der Lichtquelle und/oder der Empfangsvorrichtung, und damit für die Ausrichtung der Lichtausgangsrichtung und/oder der Empfangsrichtung, sorgt.

Darüber hinaus kann es von Vorteil sein, wenn bei einer erfindungsgemäßen Messvorrichtung der Haltekörper einen Positions-Variationsabschnitt für eine Variation der Quellenposition und/oder für eine Variation der Empfangsposition aufweist. Ein solcher Positions-Variationsabschnitt kann beispielsweise ein Langloch, eine Kugelkopflagerung oder Ähnliches aufweisen und dient dazu, die Quellenposition und/oder die Empfangsposition relativ zueinander und relativ zum Montageabschnitt zu variieren. Bevorzugt ist dieser Positions-Variationsabschnitt mit einem Fixiermechanismus ausgestattet, um nach der Durchführung der Variation die Quellenposition und/oder die Empfangsposition in der variierten Ausprägung zu fixieren. Damit ist eine höhere Flexibilität erreichbar, da für unterschiedlich geformte und/oder unterschiedlich große Gefäße eine Anpassung der Relativpositionierung stattfinden kann.

Von Vorteil ist es weiter, wenn bei einer erfindungsgemäßen Messvorrichtung der Haltekörper wenigstens einen Winkel-Variationsabschnitt aufweist, für eine Variation des spitzwinkligen Anstellwinkels. Ein solcher Winkel-Variationsabschnitt erlaubt neben der Relativpositionierung einen direkten Eingriff in den Anstellwinkel. Beispielsweise kann die bereits erläuterte Scharniervorrichtung mit dem beschriebenen variierbaren Scharnierwinkel eingesetzt werden, um als Winkel-Variationsabschnitt ausgebildet zu sein. Auch Einzelscharniere oder rotierbare Lagerungen der Lichtquelle und/oder der Empfangsvorrichtung können als Winkel-Variationsabschnitt kombiniert werden. Ein Winkel-Variationsabschnitt kann selbstverständlich mit einem Positions-Variationsabschnitt gemäß dem voranstehenden Absatz und/oder mit einem Montage-Variationsabschnitt gemäß dem nachfolgenden Absatz kombiniert werden.

Auch vorteilhaft kann es sein, wenn bei einer erfindungsgemäßen Messvorrichtung der Haltekörper wenigstens einen Montage-Variationsabschnitt, insbesondere als Teil des Montageabschnitts, aufweist, für eine Variation der Montageposition. Damit wird es möglich, auch in das System der Messvorrichtung eine Variationsmöglichkeit zu integrieren, welche die Relativposition zum Gefäß variierbar gestaltet. Auch hier können Langlöcher, Kugelkopflagerungen oder Ähnliches verwendet werden, um die Montageposition variabel auszugestalten.

Von Vorteil ist es weiter, wenn bei einer erfindungsgemäßen Messvorrichtung eine Anzeigevorrichtung ausgebildet ist, für eine Anzeige der Montageposition, der Quellenposition und/oder der Empfangsposition. Eine solche Anzeigevorrichtung kann dazu dienen, eine einfache, qualitative Anzeige zur Verfügung zu stellen, um anzuzeigen, dass die gewünschten Relativpositionierungen erreicht oder nicht erreicht worden sind. Auch eine quantitative Anzeige, insbesondere dann, wenn eines oder mehrere der beschriebenen Variationsmittel verwendet werden, ist hier grundsätzlich denkbar. Darüber hinaus ist darauf hinzuweisen, dass es sich hier um eine Anzeige für eine manuelle Variation aber auch für eine automatische Variation handeln kann.

Vorteilhaft ist es weiter, wenn bei einer erfindungsgemäßen Messvorrichtung die Lichtquelle und die Empfangsvorrichtung an einem gemeinsamen Teilabschnitt des Haltekörpers einstückig, integral und/oder monolithisch ausgebildet, sodass an einem sehr einfachen Bauteil des Haltekörpers sowohl die Lichtquelle als auch die Empfangsvorrichtung angeordnet sind. Beispielsweise kann ein solcher Teilabschnitt des Haltekörpers eine stiftartige Ausprägung haben, dessen Montageabschnitt als Clipvorrichtung oder Hängevorrichtung für die Befestigung an einem Rand eines Gefäßes ausgebildet ist.

Ebenfalls vorteilhaft ist es, wenn bei einer erfindungsgemäßen Messvorrichtung der Montageabschnitt wenigstens eine der folgenden Ausführungsformen aufweist:
- Hängeabschnitt,
- Saugabschnitt,
- Klebeabschnitt,
- Magnetabschnitt,
- Umfassungsabschnitt.

Bei der voranstehenden Aufzählung handelt es sich um eine nicht abschließende Liste. Ein Hängeabschnitt kann auch als Formschlussabschnitt ausgebildet werden und dient beispielsweise dem Einhängen an einer Oberkante des Gefäßes. Auch ein Saugabschnitt kann insbesondere für eine reversible Montage verwendet werden, um ein Anbringen direkt auf der Außenwand des Gefäßes zur Verfügung zu stellen. Zusätzlich oder alternativ zu einem Saugabschnitt kann auch ein Klebeabschnitt verwendet werden, welcher mithilfe eines Adhäsionsmittels ein kraftschlüssiges Verbinden an der Oberseite und Außenseite des Gefäßes gewährleistet. Ist das Gefäß mit einem Zusatzmontageelement mit einem Gegenmagnetabschnitt versehen, so ist auch ein magnetisches Montieren mithilfe eines Magnetabschnitts denkbar. Ein Umfassungsabschnitt kann beispielsweise ein Gefäß vollständig umfassen und auf diese Weise eine reibschlüssige Befestigung zur Verfügung stellen.

Vorteilhaft ist es darüber hinaus, wenn bei einer erfindungsgemäßen Messvorrichtung der Montageabschnitt für eine indirekte Montage an dem Gefäß ausgebildet ist. Eine indirekte Montage ist beispielsweise dann gegeben, wenn ein weiteres Bauteil die Messvorrichtung ergänzt, um zum Beispiel eine Rührfunktionalität zur Verfügung zu stellen. Dann ist der Montageabschnitt zum Beispiel mit Gewindestangen zur Verfügung gestellt, welche sich von einer plattenförmigen Aufnahme eines solchen Rührantriebs nach oben erstrecken. Auch eine indirekte Montage über eine entsprechende Aufnahme für das Gefäß oder eine Tischplatte, auf welcher das Gefäß abgestellt ist, ist hier grundsätzlich denkbar.

Ein weiterer Gegenstand der vorliegenden Erfindung ist ein Gefäß für eine Aufnahme eines wenigstens teilweise flüssigen Gefäßinhalts. Ein solches Gefäß weist eine Messvorrichtung mit den Merkmalen der vorliegenden Erfindung auf, welche an das Gefäß in Montageposition montiert ist. Damit bringt ein erfindungsgemäßes Gefäß die gleichen Vorteile mit sich, wie sie ausführlich mit Bezug auf eine erfindungsgemäße Messvorrichtung erläutert worden sind.

Darüber hinaus ist Gegenstand der vorliegenden Erfindung ein Verfahren für eine Montage einer Messvorrichtung gemäß der vorliegenden Erfindung an einem Gefäß, aufweisend den folgenden Schritt:
- Montieren des Haltekörpers in der definierten Montageposition an dem Gefäß mittels des Montageabschnitts.

Auch bringt ein erfindungsgemäßes Verfahren die gleichen Vorteile mit sich, wie sie ausführlich mit Bezug auf eine erfindungsgemäße Messvorrichtung erläutert worden sind. Selbstverständlich sind der Montage nachfolgend oder auch vorausgehend auch Einstellmöglichkeiten in Form von Variationsschritten denkbar, welche eine Positionsvariation mithilfe eines Positions-Variationsabschnitts, eine Winkelvariation mithilfe eines Winkel-Variationsabschnitts und/oder eine Montagepositionsvariation mithilfe des Montage-Variationsabschnitts durchführen.

Ein erfindungsgemäßes Verfahren lässt sich dahingehend weiterbilden, dass nach Montage des Haltekörpers in der Montageposition wenigstens ein Kalibrierschritt durchgeführt wird, für ein Kalibrieren der durchzuführenden Reflexionsmessung. Dies gilt insbesondere dann, wenn einer der bereits erläuterten Variationsschritte durchgeführt wird oder bereits worden ist. So können einzelne Positionen zueinander kalibriert werden, aber auch die Auswertlogik oder die Sensorik selbst. Beispielsweise sind Testmessungen oder Ähnliches an einem leeren Gefäß oder an einem Gefäß mit definiertem Inhalt möglich. Weiter ist ein Kalibrieren gegen Umgebungslicht, also basierend auf der aktuellen Umgebungslichtsituation, möglich. So können auch in dem Gefäß Kalibrierlösungen oder sogar vollständig ausgebildete Kalibriergefäße verwendet werden, um einen solchen Kalibrierschritt durchzuführen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Ausführungsform einer ersten Messvorrichtung,
- Fig. 2: die Ausführungsform der Figur 1 an einem anderen Gefäß,
- Fig. 3: die Ausführungsform der Figuren 1 und 2 an einem anderen Gefäß,
- Fig. 4: eine weitere Ausführungsform einer erfindungsgemäßen Messvorrichtung,
- Fig. 5: die Ausführungsform der Figur 4 mit einer Variation der Empfangsposition,
- Fig. 6: eine weitere Ausführungsform einer erfindungsgemäßen Messvorrichtung,
- Fig. 7: die Ausführungsform der Figur 6 in einer anderen Winkelvariation,
- Fig. 8: die Darstellung gekrümmter Kontaktflächen,
- Fig. 9: eine weitere Ausführungsform einer erfindungsgemäßen Messvorrichtung,
- Fig. 10: eine weitere Ausführungsform einer erfindungsgemäßen Messvorrichtung,
- Fig. 11: eine weitere Ausführungsform einer erfindungsgemäßen Messvorrichtung.

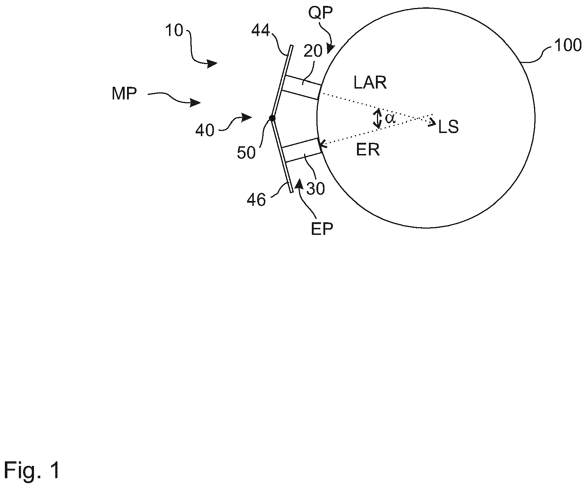

Anhand der Figuren 1 bis 3 wird gut ersichtlich, wie in reversibler und variabler Weise der Einsatz einer Messvorrichtung 10 möglich ist. Die Figur 1 zeigt eine Messvorrichtung 10 in angebrachter Montageposition MP an einem Gefäß 100. Über eine Scharniervorrichtung 50 als Teil des Haltekörpers 40 sind ein Quellen-Haltearm 44 und ein Empfangs-Haltearm 46 miteinander beweglich verbunden. Am Quellen-Haltearm 44 ist die Lichtquelle 20, beispielsweise als Laserlichtquelle, angeordnet und als Quellenposition QP definiert. In ähnlicher Weise ist am Empfangs-Haltearm 46 eine Empfangsvorrichtung 30 in Empfangsposition EP angeordnet und definiert auf diese Weise die Empfangseingangsrichtung ER. Zwischen der Empfangseingangsrichtung ER und der Lichtausgangsrichtung LAR der Lichtstrahlen LS bildet sich hier der spitzwinklige Anstellwinkel α in der gewünschten Weise aus.

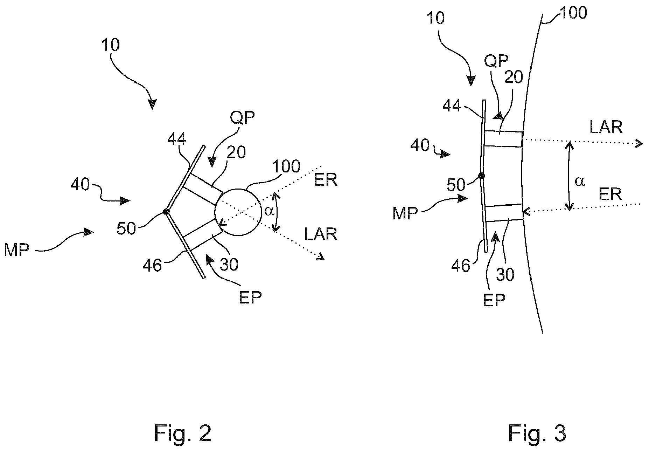

Die Figur 2 zeigt die gleiche Ausführungsform der Messvorrichtung 10, jedoch wurde hier eine Anpassung des spitzwinkligen Anstellwinkels α an die sich veränderte Geometrie des Gefäßes 100 automatisch erwirkt. Allein durch die Tatsache, dass zum Anbringen und Kontaktieren von Lichtquelle 20 und Empfangsvorrichtung 30 an der äußeren Oberseite des Gefäßes 100 eine Scharnierbewegung um die Scharniervorrichtung 50 erfolgt ist, ändert sich die Relativpositionierung der Quellenposition QP und der Empfangsposition EP in der Montageposition MP, wodurch sich automatisch auch der Anstellwinkel α zwischen der Empfangsrichtung ER und der Lichtausgangsrichtung LAR ändert.

Die im voranstehenden Absatz erläuterte Änderung trifft auch auf einen deutlich grö-ßeren Durchmesser eines Gefäßes 100 zu, wie es die Figur 3 zeigt. Hier sind die Lichtausgangsrichtung LAR und die Empfangsrichtung ER fast parallel ausgestaltet, sodass sich ein sehr kleiner spitzwinkliger Anstellwinkel α ergibt. Auch diese Anpassung an das Gefäß 100 unter Beibehaltung eines für dieses Gefäß 100 angepassten spitzwinkligen Anstellwinkels α wurde durch die Scharnierbewegung um das Scharnier 50, hier in automatischer Weise durch die Kontaktierung der Oberfläche des Gefäßes 100, gewährleistet.

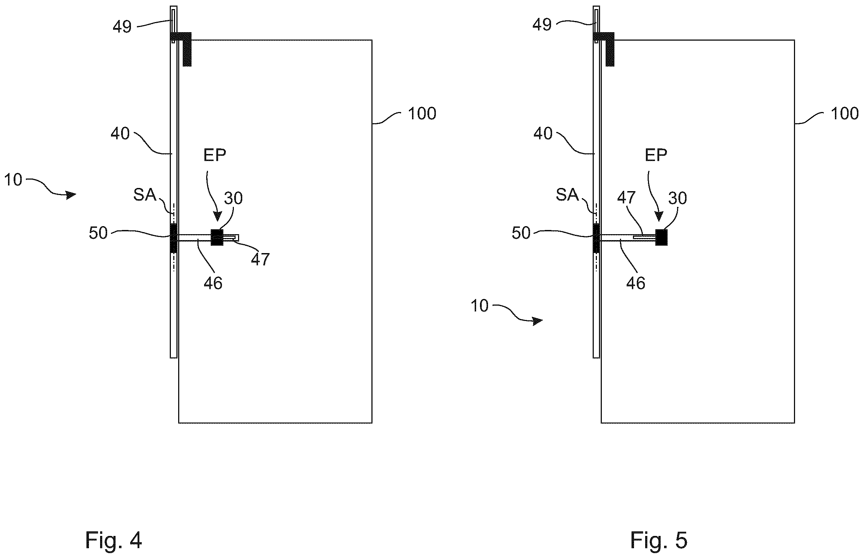

Die Figuren 4 und 5 zeigen noch eine Variante, wie eine manuelle Variation im Gegensatz zur automatischen kontaktierenden Anpassung der Figuren 1 bis 3 für eine Messvorrichtung 10 möglich ist. Hier ist die Messvorrichtung 10 mit einem Haltekörper 40 ausgebildet, welcher eine stiftförmige oder im Wesentlichen stiftförmige Variante aufweist. Mithilfe eines Langlochs ist ein Montage-Variationsabschnitt 49 vorgesehen, welcher in der Höhenrichtung von oben nach unten in den Figuren 4 und 5 die Montageposition MP veränderbar macht. Zusätzlich ist hier zwischen der Figur 4 und 5 eine manuelle Variation dargestellt, für die Empfangsposition EP der Empfangsvorrichtung 30. Diese ist hier wieder über ein Langloch als Positionsvariationsabschnitt 47 an dem Empfangs-Haltearm 46 ausgebildet und kann zwischen den beiden Endpositionen, wie sie in den Figuren 4 und 5 dargestellt sind, manuell positioniert werden. Für eine Anpassung an unterschiedliche Durchmesser des Gefäßes 100 ist hier wieder eine Scharniervorrichtung 50 mit einer Scharnierachse SA verwendet, wie sie bereits mit Bezug auf die Ausführungsformen der Figuren 1 bis 3 Erläuterung gefunden hat.

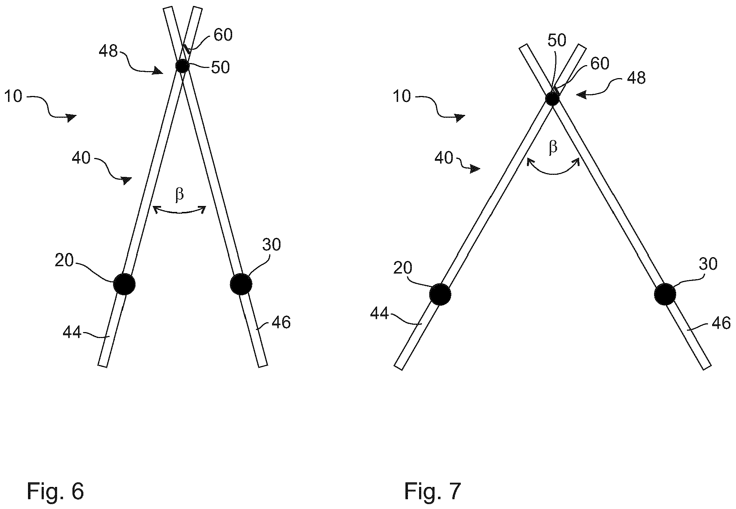

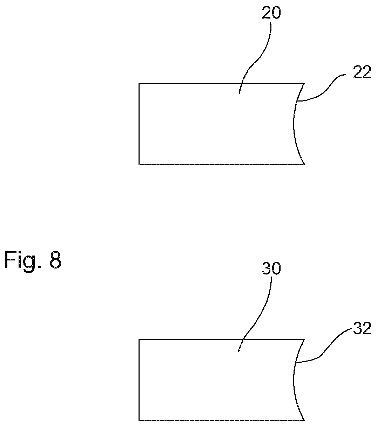

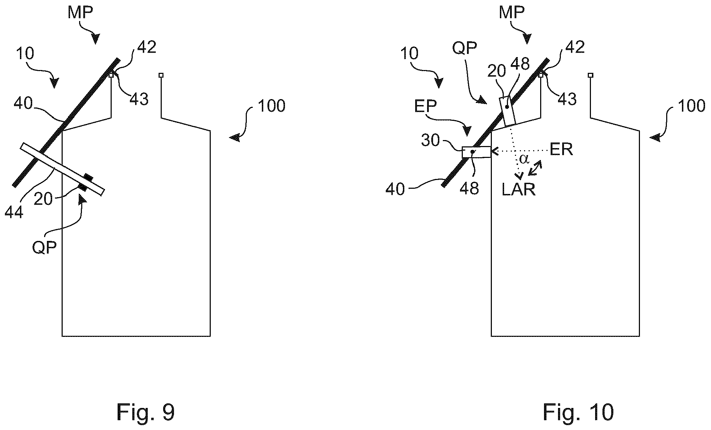

Die Figuren 6 und 7 zeigen eine zirkelartige Ausgestaltung einer Messvorrichtung 10. Diese kann dadurch variiert werden, dass durch die Scharniervorrichtung 50, welche hier als Zirkelgelenk ausgebildet ist, nun einem Scharnierwinkel β angepasst werden kann, welcher sich bei einem Einhängen an einem Gefäß 100, wie es beispielsweise in den Figuren 9 bis 11 dargestellt ist, automatisch auf den Anstellwinkel α auswirken. Hier sind an jedem der Zirkelarme als Quellen-Haltearm 44 und als Empfangs-Haltearm 46 die Lichtquelle 20 beziehungsweise die Empfangsvorrichtung 30 angeordnet. Darüber hinaus ist an den kurzen Zirkelarmen eine Anzeigevorrichtung 60 dargestellt, welche es nun erlaubt, das Erreichen der gewünschten Relativposition in Montageposition MP zumindest in qualitativer Weise anzuzeigen. Die Figur 8 ist eine Detaildarstellung von einer Empfangsvorrichtung 30 und einer Lichtquelle 20 mit einfach gekrümmten Kontaktflächen 22 und 32, wie sie beispielsweise bei der Ausführungsform der Figur 1 bis 3 eingesetzt werden kann.

Die Figur 9 zeigt eine Weiterbildung einer Messvorrichtung 10, welche hier nicht an einem Becherglas, sondern an einem flaschenförmigen Gefäß 100 in Montageposition MP dargestellt ist. Auch hier ist das Montagemittel 43 wieder als Hängevorrichtung ausgestaltet und bildet den Montageabschnitt 42 aus. Am Haltekörper 40 ist hier dargestellt, zumindest auf der einen Seite, ein Quellen-Haltearm 44 vorgesehen, dessen Relativposition eine definierte Empfangsquellenposition QP für die Lichtquelle 20 zur Verfügung stellt.

Die Figur 10 ist ähnlich der Figur 9, jedoch ohne einen separaten Quellen-Haltearm 44. Vielmehr sind hier an einem gemeinsamen Teilstück des Haltekörpers 40 sowohl die Lichtquelle 20 als auch die Empfangsvorrichtung 30 angeordnet, sodass hier die Quellenposition und die Empfangsposition festgelegt sind. Trotzdem ist hier mithilfe von einzelnen Scharnieren als Winkel-Variationsabschnitten 48 eine Variation des Anstellwinkels α möglich.

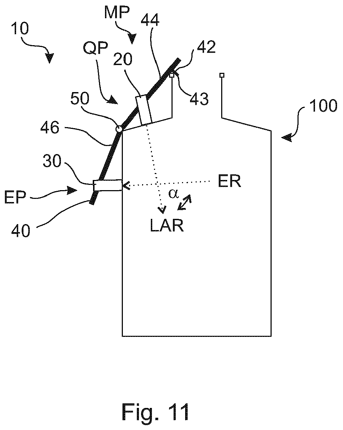

Auch die Figur 11 ist eine Variante für eine Befestigung an einem flaschenartigen Gefäß 100, wobei jedoch hier die Scharniervorrichtung 50 ein Abknicken des Haltekörpers 40 erlaubt, sodass eine feste Relativpositionierung für Quellenposition QP und Empfangsposition EP trotzdem über die Scharnierbewegung und die Scharniervorrichtung 50 eine Variation der Empfangsrichtung ER und der Lichtausgangsrichtung LAR und damit des Anstellwinkels α erlaubt.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Messvorrichtung
- 20: Lichtquelle
- 22: Kontaktfläche
- 30: Empfangsvorrichtung
- 32: Kontaktfläche
- 40: Haltekörper
- 42: Montageabschnitt
- 43: Montagemittel
- 44: Quellen-Haltearm
- 46: Empfangs-Haltearm
- 47: Positions-Variationsabschnitt
- 48: Winkel-Variationsabschnitt
- 49: Montage-Variationsabschnitt
- 50: Scharniervorrichtung
- 60: Anzeigevorrichtung

- 100: Gefäß

- MP: Montageposition
- QP: Quellenposition
- EP: Empfangsposition

- LS: Lichtstrahl
- LAR: Lichtausgangsrichtung
- ER: Empfangsrichtung
- SA: Scharnierachse

- α: Anstellwinkel
- β: Scharnierwinkels

## Patentansprüche

1. Messvorrichtung (10) für eine Durchführung einer Reflexionsmessung an einem Gefäß (100), aufweisend eine Lichtquelle (20) zur Erzeugung eines Lichtstrahls (LS) entlang einer Lichtausgangsrichtung (LAR) und eine Empfangsvorrichtung (30) zum Empfangen von Lichtstrahlen (LS) entlang einer Empfangsrichtung (ER), weiter aufweisend einen Haltekörper (40) an welchem die Lichtquelle (20) und die Empfangsvorrichtung (30) befestigt sind, wobei der Haltekörper (40) einen Montageabschnitt (42) aufweist für eine Montage an dem Gefäß (100) in einer definierten Montageposition (MP), wobei weiter die Lichtquelle (20) am Haltekörper (40) relativ zum Montageabschnitt (42) in einer definierten Quellenposition (QP) und die Empfangsvorrichtung (30) am Haltekörper (40) relativ zum Montageabschnitt (42) in einer definierten Empfangsposition (EP) angeordnet sind, so dass sich zwischen der Empfangsrichtung (ER) und der Lichtausgangsrichtung (LAR) ein spitzwinkliger Anstellwinkel (α) ausbildet, so dass die Empfangsvorrichtung (30) aus dem Gefäß (100) reflektierte Lichtstrahlen (LS) empfängt.

2. Messvorrichtung (10) nach Anspruch 1, **dadurch gekennzeichnet, dass** der Haltekörper (40) wenigstens einen Quellen-Haltearm (44) aufweist, an welchem die Lichtquelle (20) befestigt ist, und/oder einen Empfangs-Haltearm (46) aufweist, an welchem dir Empfangsvorrichtung (30) befestigt ist, wobei der Quellen-Haltearm (44) und/oder der Empfangs-Haltearm (46) insbesondere mittels einer Scharniervorrichtung (50) verbunden sind zur Einstellung wenigstens Scharnierwinkels (β) zwischen dem Quellen-Haltearm (44) und dem Empfangs-Haltearm (46) durch Bewegung um eine Scharnierachse (SA) der Scharniervorrichtung (50).

3. Messvorrichtung (10) nach einem der vorangegangenen Ansprüche, **dadurch gekennzeichnet, dass** der Montageabschnitt (42) wenigstens ein reversibles Montagemittel (43) aufweist für eine reversible Montage an dem Gefäß (100) in der Montageposition (MP).

4. Messvorrichtung (10) nach einem der vorangegangenen Ansprüche, **dadurch gekennzeichnet, dass** die Lichtquelle (20) und/oder die Empfangsvorrichtung (30) eine Kontaktfläche (22, 32) aufweisen für eine Kontaktierung des Gefäßes (100).

5. Messvorrichtung (10) nach Anspruch 4, **dadurch gekennzeichnet, dass** die Kontaktfläche (22, 32) der Lichtquelle (20) und/oder der Empfangsvorrichtung (30) einen Ausrichtungsabschnitt aufweist für eine Ausrichtung oder eine Unterstützung der Ausrichtung der Lichtausgangsrichtung (LAR) und/oder der Empfangsrichtung (ER).

6. Messvorrichtung (10) nach einem der vorangegangenen Ansprüche, **dadurch gekennzeichnet, dass** der Haltekörper (40) einen Positions-Variationsabschnitt (47) für eine Variation der Quellenposition (QP) und/oder für eine Variation der Empfangsposition (EP) aufweist.

7. Messvorrichtung (10) nach einem der vorangegangenen Ansprüche, **dadurch gekennzeichnet, dass** der Haltekörper (40) wenigstens einen Winkel-Variationsabschnitt (48) aufweist für eine Variation des spitzwinkligen Anstellwinkels (α).

8. Messvorrichtung (10) nach einem der vorangegangenen Ansprüche, **dadurch gekennzeichnet, dass** der Haltekörper (40) wenigstens einen Montage-Variationsabschnitt (49), insbesondere als Teil des Montageabschnitts (42), aufweist für eine Variation der Montageposition (MP).

9. Messvorrichtung (10) nach einem der vorangegangenen Ansprüche, **dadurch gekennzeichnet, dass** eine Anzeigevorrichtung (60) ausgebildet ist für eine Anzeige der Montageposition (MP), der Quellenposition (QP) und/oder der Empfangsposition (EP).

10. Messvorrichtung (10) nach einem der vorangegangenen Ansprüche, **dadurch gekennzeichnet, dass** die Lichtquelle (20) und die Empfangsvorrichtung (30) an einem gemeinsamen Teilabschnitt des Haltekörpers (40) befestigt sind.

11. Messvorrichtung (10) nach einem der vorangegangenen Ansprüche, **dadurch gekennzeichnet, dass** der Montageabschnitt (42) wenigstens eine der folgenden Ausführungsformen aufweist:
- Hängeabschnitt
- Saugabschnitt
- Klebeabschnitt
- Magnetabschnitt
- Umfassungsabschnitt

12. Messvorrichtung (10) nach einem der vorangegangenen Ansprüche, **dadurch gekennzeichnet, dass** der Montageabschnitt (42) für eine indirekte Montage an dem Gefäß (100) ausgebildet ist.

13. Gefäß (100) für eine Aufnahme eines wenigstens teilweise flüssigen Gefäßinhalts, weiter aufweisend wenigstens eine Messvorrichtung (10) mit den Merkmalen eines der Ansprüche 1 bis 12, welche an dem Gefäß in der Montageposition (MP) montiert ist.

14. Verfahren für eine Montage einer Messvorrichtung (10) mit den Merkmalen eines der Ansprüche 1 bis 13 an einem Gefäß (100), aufweisend den folgenden Schritt:
- Montieren des Haltekörpers (40) in der definierten Montageposition (MP) an dem Gefäß (100) mittels des Montageabschnitts (42)

15. Verfahren nach Anspruch 13, **dadurch gekennzeichnet, dass** nach Montage des Haltekörpers (40) in der Montageposition (MP) wenigstens eine Kalibrierschritt durchgeführt wird für ein Kalibrieren der durchzuführenden Reflexionsmessung.
